# EUROPÄISCHE PATENTANMELDUNG

(11) **EP 2 706 535 A1**
(43) Veröffentlichungstag der Anmeldung: **12.03.2014**
(21) Anmeldenummer: 12183317.2
(22) Anmeldetag: 06.09.2012
(51) Int. Cl.: G21D 1/00, G21D 1/02, G21D 5/16

(54) **Verfahren zum Nachrüsten eines Kernkraftwerks**

(71) Anmelder: Siemens Aktiengesellschaft, 80333 München (DE)
(72) Erfinder: Lenk, Uwe, 08064 Zwickau (DE); Tremel, Alexander, 91052 Erlangen (DE)

(57) **Zusammenfassung**

Die Erfindung betrifft u.a. ein Verfahren zum Nachrüsten eines Kernkraftwerks (1) umfassend folgenden Schritt: Wärmetechnische Integration mindestens eines elektrischen Heizelements (10), welches zur Aufnahme von elektrischer Energie aus einem externen Versorgungsnetzwerk (100) geeignet ist, in einen bestehenden Wasserkreislauf (20) des Kernkraftwerks (1). Darüber betrifft die Erfindung auch noch ein solches nachgerüstete Kernkraftwerk (1) soweit ein Verfahren zum Betrieb eines solchen Kernkraftwerks (1).

## Beschreibung

Die vorliegende Erfindung betrifft ein Verfahren zum Nachrüsten eines Kernkraftwerks sowie ein solches Kernkraftwerk wie auch ein Verfahren zum Betrieb eines solchen Kernkraftwerks.

Aufgrund der vermehrten Einspeisung elektrischer Energie von zeitlich stark variierenden regenerativen Energieträgern - Sonnenenergie, Windenergie - in die öffentlichen Stromversorgungsnetzwerke nehmen Lösungen zur Energiespeicherung eine zunehmende Bedeutung ein. Insbesondere bei einem Überangebot von regenerativ erzeugter elektrischer Energie, etwa während einer Starkwindphase im Bereich eines Windenergiekraftwerks, stellt es sich als wünschenswert dar, die vermehrt anfallende elektrische Energie zeitlich zwischenzuspeichern, und bei Bedarf zu einem späteren Zeitpunkt wieder in das öffentliche Stromversorgungsnetz einzuspeisen.

Aufgrund der Installation von Kraftwerken im Leistungsbereich von wenigstens mehreren Megawatt, die auf der Nutzung von regenerativen Energieträgern beruhen, wird auch eine Speicherung von elektrischer Energie in einer vergleichbaren Größenordnung notwendig. Um solche Energiemengen zeitlich zwischenspeichern zu können, ist typischerweise eine Umsetzung der zu speichernden elektrischen Energie in eine andere Form der Energie notwendig. Insbesondere die gut beherrschte Technologie der Pumpspeicherkraftwerke kann hierbei ausreichende Energiemengen zwischenspeichern. Pumpspeicherkraftwerke benötigen jedoch eine geographisch ausreichende Höhendifferenz zwischen einem höher gelegenen Wasserreservoir und einem weiter tiefer gelegenen Wasserreservoir. Diese geographischen Rahmenbedingungen machen die Realisierung eines Pumpspeicherkraftwerkes vielerorts jedoch gleichermaßen unmöglich. Weiterhin erweist sich die Technologie als nachteilig, da Pumpspeicherkraftwerke eine lange Planungsphase wie auch einen hohen Investitionsaufwand benötigen. Folglich ist ein schneller Ausbau von hohen Kapazitäten auf der Grundlage der Pumpspeichertechnologie nicht zu erwarten.

Ebenfalls ist eine großtechnische Speicherung von elektrischer Energie mit Hilfe von Druckluftspeicherkraftwerken besonders planungs- wie auch kostenintensiv. Zudem ist die Technologie der Druckluftspeicherung im Vergleich zur Technologie der Pumpspeicherung weniger ausgereift, so dass noch weitere technische Fortschritte zu machen sind, um einen großflächigen und schnellen Ausbau der Speicherkapazitäten zu ermöglichen.

Die Speicherung von elektrischer Energie im Megawattbereich wird insbesondere zunehmend dringlich mit einem voranschreitenden Ausbau der Windkraftanlagen in deutschen Küstengebieten. Dort wurden zahlreiche Offshore-Windparks bereits in Betrieb genommen, bzw. stehen kurz vor der Inbetriebnahme. Zu Zeiten der Überstromproduktion können sich jedoch aufgrund der vermehrt in die öffentlichen Stromversorgungsnetzwerke einzuspeisenden elektrischen Energiemengen Verteilungs- wie auch Übertragungsprobleme ergeben, die zu Netzinstabilitäten führen können. Der Einsatz von großtechnischen Energiespeichern nahe der Orte, an welchen die Überstromproduktion erfolgt, kann eine Verbesserung nicht nur der regionalen Netzstabilität ermöglichen. Zudem werden durch die örtliche Nähe von Produktionsort und Speicherort die Übertragungsverluste vorteilhaft verringert.

Entsprechend diesen Umständen erweist es sich als wünschenswert, eine technische Lösung für die Zwischenspeicherung von großtechnischen Mengen an elektrischer Energie zur Verfügung zu stellen, welche die Nachteile aus dem Stand der Technik vermeiden kann. Insbesondere ist es wünschenswert, eine großtechnische Energiespeicherlösung vorzuschlagen, welche in bereits bestehende Energieinfrastrukturen leicht integriert werden kann. Zudem sollen die technischen Lösungen auch in örtlicher Nähe zu den insbesondere in Deutschland entstehenden Offshore-Windparks realisiert werden können.

Weiterhin ist es wünschenswert, eine technisch einfache und in der Planung schnell zu realisierende Lösung vorzuschlagen, um auch kurzfristig handeln zu können.

Diese Aufgaben werden allesamt bzw. teilweise durch ein Verfahren zum Nachrüsten eines Kernkraftwerks gemäß Anspruch 1, wie auch durch ein solches nachgerüstetes Kernkraftwerk gemäß Anspruch 8, wie auch durch ein Verfahren zum Betrieb eines solchen Kernkraftwerkes gemäß Anspruch 10 gelöst.

Insbesondere werden diese Aufgaben gelöst durch ein Verfahren zum Nachrüsten eines Kernkraftwerkes umfassend folgenden Schritt: Wärmetechnische Integration mindestens eines elektrischen Heizelementes, welches zur Aufnahme von elektrischer Energie aus einem externen Versorgungsnetzwerk geeignet ist, in einen bestehenden Wasserkreislauf des Kernkraftwerks;

Ebenso werden die Aufgaben gelöst durch ein solches nachgerüstetes Kernkraftwerk, welches nach einem solchen Verfahren erhältlich ist.

Weiterhin werden die der Erfindung zugrunde liegenden Aufgaben durch ein Verfahren zum Betrieb eines Kernkraftwerks gelöst, welches nach einem solchen Verfahren erhältlich ist, welches folgende Schritte aufweist:
- Betreiben des mindestens einen elektrischen Heizelementes zur Umwandlung von elektrischer in thermische Energie;
- Übertragen von thermischer Energie an Wasser in einem bestehenden Wasserkreislauf des Kernkraftwerks zum Erwärmen des Wassers;

Überdies werden die der Erfindung zugrunde liegenden Aufgaben durch ein Verfahren zum Betrieb eines Kernkraftwerks gelöst, welches folgenden Schritt aufweist:
- Betreiben wenigstens einer mit dem Reaktordruckbehälter zusammen wirkenden Umwälzpumpe, welche elektrische Energie aus einem externen Versorgungsnetzwerk aufnimmt, unter Übertragen von thermischer Energie an Wasser in einem bestehenden Wasserkreislauf des Kernkraftwerks zum Erwärmen des Wassers;

Der Wasserkreislauf umfasst im Sinne der Erfindung alle Wasser führenden Leitungen des Kraftwerkskreislaufes zusammen mit allen damit fluidtechnisch verschalteten Bau- und Funktionsteilen.

Erfindungsgemäß wird also vorgeschlagen, ein Kernkraftwerk durch eine Nachrüstung mit einem elektrisch betriebenen Heizelement für die Erzeugung wie auch Speicherung von thermischer Energie bereitzustellen. Hierbei dient das wenigstens eine elektrische Heizelement der Umwandlung von elektrischer Energie in thermische Energie, welche darauf folgend auf sich in einem Wasserkreislauf des Kernkraftwerks befindliches Wasser übertragen wird. Der Wasserkreislauf ist hierbei ein bereits bestehender Wasser-Dampf-Kreislauf. Allgemein wird also ein elektrisches Heizelement so wärmetechnisch in dem Kernkraftwerk integriert und betrieben, dass das sich in einem Kraftwerkskreislauf befindliche Wasser thermisch konditioniert werden kann.

Bei Aufnahme von elektrischer Energie erfolgt die Umwandlung in thermische Energie, welche mittels des sich in dem Wasserkreislauf befindlichen Wassers zeitlich bevorratet werden kann. Damit steht die thermische Energie zu einem späteren Zeitpunkt wiederum zur Verfügung, um etwa in einem Rückverstromungsverfahren elektrische Energie erneut bereitstellen zu können.

Zur weiteren Umwandlung von elektrischer in thermische Energie können auch die mit dem Reaktordruckbehälter zusammen wirkenden Umwälzpumpen eingesetzt werden. Solche Umwälzpumpen ermöglichen in regelmäßigem, nuklearem Betrieb des Kernkraftwerks eine kontinuierliche Umströmung der Brennstäbe durch Wasser des Wasserkreislaufs. Werden diese Umwälzpumpen etwa unter hoher Last betrieben, kommt es aufgrund der Reibung im Wasser und der Wärmeentwicklung im Motor der Umwälzpumpen zu einer Wärmeübertragung an das Wasser in dem Wasserkreislauf und damit zu einer Erhitzung des Wassers. Demgemäß kann auch aus dem Netz aufgenommene elektrische Leistung in thermische Energie zur Erwärmung des Wassers in dem Wasserkreislauf umgesetzt werden. Dies ist eine besonders einfache Möglichkeit, Wasser in dem Wasserkreislauf zu konditionieren, ohne elektrische Heizelemente einbringen zu müssen.

Gemäß einer Weiterführung dieser Idee können auch der Betrieb der wenigstens einen Umwälzpumpe mit dem Betrieb des mindestens einen elektrischen Heizelementes kombiniert werden. Je nach Leistungsgröße der Umwälzpumpe kann aber auch auf eine gleichzeitige Ausrüstung mit einem elektrischen Heizelement verzichtet werden. In einem solchen Fall ist eine Nachrüstung des Kernkraftwerks mit elektrischen Heizelementen nicht notwendig.

Die erfindungsgemäßen Verfahren wie auch das erfindungsgemäße nachgerüstete Kernkraftwerk eignen sich insbesondere in Deutschland zu einer großtechnischen Energiespeichertechnologie weiterentwickelt zu werden, da in Deutschland aufgrund der politischen Rahmenbedingungen zahlreiche Kernkraftwerke stillgelegt werden. Stillgelegte Anlagen verursachen jedoch aufgrund der andauernden Wartung weiterhin hohe Kosten. Zudem sind hohe Kosten aufgrund des Rückbaus dieser Kernkraftwerke zu erwarten.

Die Nutzung von stillgelegten Kernkraftwerken in Form einer großtechnischen thermischen Energiespeicherung gewährt hierbei zahlreiche Vorteile. Einerseits kann die bereits bestehende Infrastruktur sowie Netzanbindung des Kernkraftwerks auch bei einer thermischen Energiespeicherlösung vorteilhaft genutzt werden. Die zusätzlichen Investitionskosten, welche durch ein Nachrüsten des Kernkraftwerkes entstehen, sind im Vergleich zu Neubauten von Energiespeichern, etwa eines Pumpspeicherkraftwerkes bzw. eines Druckluftspeicherkraftwerkes, verhältnismäßig gering. Weiter sind vereinfachte Genehmigungsverfahren zu erwarten, da die Standorte des Kernkraftwerkes bereits energietechnisch genutzt wurden.

Zudem würde die Weiternutzung des Kernkraftwerkes als thermischer Energiespeicher keine weiteren Kernbrennstoffe erfordern. Damit lässt sich das Kernkraftwerk verhältnismäßig umweltfreundlich weiter betreiben. Zudem könnte die Wirtschaftlichkeit des Kernkraftwerks bis zu einem Zeitpunkt des Rückbaus deutlich verbessert werden.

Weiterhin ist darauf hinzuweisen, dass insbesondere in Deutschland eine große Anzahl von Kernkraftwerken in Küstennähe bereits stillgelegt wurden (z.B. Krümmel, Brunsbüttel, Unterweser, Stade) oder im Rahmen der energiepolitischen Änderungen in Deutschland noch stillgelegt werden müssen (z.B. Brokdorf, Emsland, Grohnde). Damit stehen eine Anzahl an Kernkraftwerken zur Verfügung, die insbesondere in örtlicher Nähe zu bereits bestehenden Offshore-Windparks bzw. noch in Betrieb zu nehmenden Offshore-Windparks in Deutschland angesiedelt sind. Diese örtliche Nähe erlaubt eine besonders effiziente Energiespeicherung, da vor allem Übertragungsverluste über Regionen hinweg vermindert werden können. Kernkraftwerke in Küstennähe erweisen sich folglich als überaus vorteilhafte Standorte, die für die Offshore-Windparks notwendigen Energiespeicherkonzepte zu verwirklichen bzw. voranzutreiben. Dies ist natürlich auch in anderen Ländern mit vergleichbaren Rahmenbedingungen der Fall.

Gemäß einer ersten besonders bevorzugten Ausführungsform des Verfahrens zum Nachrüsten eines Kernkraftwerks ist vorgesehen, dass folgende weiteren Schritte umfasst sind:
- Bereitstellen wenigstens eines Wasserspeichers;
- fluidtechnisches Verschalten des wenigstens einen Wasserspeichers mit einem Wasserkreislauf, insbesondere mit einem bereits bestehenden bzw. dem bereits bestehenden Wasserkreislauf des Kernkraftwerks.

Das nachgerüstete Kernkraftwerk weist folglich wenigstens einen Wasserspeicher auf. Hierbei ist insbesondere der Wasserspeicher als Druckwasserspeicher ausgeführt, um auch Wärme bei über 100°C speichern zu können. Der Wasserspeicher erlaubt die zeitliche Bevorratung von mit dem mindestens einen elektrischen Heizelement thermisch konditionierten Wasser. Insbesondere kann der Wasserspeicher eine Größe aufweisen, die die Bevorratung mehrerer MWh an thermischer Energie ermöglichen kann. Soll zu einem zeitlich späteren Zeitpunkt diese Energie aus dem Wasserspeicher wieder entnommen werden, kann bspw. das noch thermisch konditionierte Wasser einer Dampfturbine zur Rückverstromung zugeleitet werden. Folglich ermöglicht die Bereitstellung des wenigstens einen Wasserspeichers eine Flexibilisierung des nachgerüsteten Kernkraftwerks.

Gemäß einem weiteren besonders bevorzugten Verfahren zum Nachrüsten des Kernkraftwerks kann das elektrische Heizelement in einen Reaktordruckbehälter integriert werden. Das wenigstens eine Heizelement ist also in den Reaktordruckbehälter integriert. Handelt es sich bei dem Reaktor des Kernkraftwerks um einen Druckwasserreaktor ist die Integration des wenigstens einen elektrischen Heizelements in den Primärwasserkreislauf erforderlich. Arbeitet das nachgerüstete Kernkraftwerk auf der Grundlage eines Siedewasserreaktors, wird das elektrische Heizelement in den Wasser-Dampf-Kreislauf des Siedewasserreaktors integriert. Aufgrund der mechanischen Integration kann bei Betrieb des elektrischen Heizelements Wärme in dem Reaktordruckbehälter an darin befindliches Wasser übertragen werden. Gleichzeitig kann der Reaktordruckbehälter als Wasserreservoir dienen, um bspw. das mittels des elektrischen Heizelements thermisch konditionierte Wasser zu bevorraten. Ausführungsgemäß kann es folglich ausreichend sein, eine Bevorratung von thermisch konditioniertem Wasser lediglich in dem Reaktordruckbehälter und nicht in einem möglicherweise überdies vorzusehenden Wasserspeicher zu bevorraten. Ein Wasserspeicher ermöglicht jedoch die Zwischenspeicherung von verhältnismäßig größeren Mengen an thermischer Energie.

Die Integration des wenigstens einen elektrischen Heizelements in dem Reaktordruckbehälter vermag zudem durch die Verwendung bereits bestehender Durchführungen des Reaktordruckbehälters besonders vorteilhaft ausgebildet werden. Die Integration in dem Reaktordruckbehälter erfordert folglich verhältnismäßig wenig bauliche Änderungen.

Alternativ hierzu kann gemäß einer weiteren Ausführungsform das elektrische Heizelement auch in eine externe Heizeinheit integriert werden bzw. sein, wobei die externe Heizeinheit bzw. das elektrische Heizelement mit dem Reaktordruckbehälter bzw. einem Wasserkreislauf bzw. dem bereits bestehenden Wasserkreislauf fluidtechnisch verschaltet wird bzw. ist. Aufgrund der fluidtechnischen Verschaltung kann auch eine wärmetechnische Kopplung erreicht werden. Weiterhin erfolgt die fluidtechnische Verschaltung bei einem Druckwasserreaktor insbesondere nicht in dem Primärkreislauf, sondern in einem nicht-nuklearen Kreislauf, d.h. insbesondere dem Sekundärkreislauf. Hierdurch wird die Kontamination der Heizelemente bzw. der externen Heizeinheit verhindert. Die externe Heizeinheit kann so vorteilhaft mit den elektrischen Heizelementen vorgefertigt werden, wobei eine fluidtechnische Verschaltung mit dem Reaktordruckbehälter bzw. einem Wasserkreislauf bzw. dem bereits bestehenden Wasserkreislauf erst zu einem späteren Zeitpunkt vorgenommen werden kann. Dies verringert den baulichen Aufwand während der Nachrüstung des Kernkraftwerks.

Gemäß einer Weiterführung dieser Ausführungsform ist vorgesehen, dass die externe Heizeinheit mit einem Wasserkreislauf bzw. dem bereits bestehenden Wasserkreislauf über einen Wärmetauscher verschaltet wird bzw. ist. Der Wärmetauscher ist hierbei insbesondere als bereits bestehender Dampferzeuger ausgebildet. Die externe Heizeinheit ist folglich nur noch fluidtechnisch bzw. wärmetechnisch mit dem bereits bestehenden Wärmetauscher zu verschalten, ohne weitere wesentliche Änderungen an dem Wasserkreislauf vornehmen zu müssen. Ausführungsgemäß stellt dies eine besonders einfache Form der Nachrüstung des Kernkraftwerks dar.

Gemäß einer weiteren besonders bevorzugten Ausführungsform der Erfindung ist vorgesehen, dass eine By-Pass-Leitung vorgesehen wird bzw. ist, die zur fluidtechnischen Umgehung einer Hochdruckturbine des Kernkraftwerks ausgebildet ist. Die By-Pass-Leitung ermöglicht die Einleitung von mit dem wenigstens einen thermischen Heizelement konditioniertem Wasser direkt in eine stromabwärts zu der Hochdruckturbine angeordnete weitere Turbine (Mitteldruckturbine, Niederdruckturbine), um die in dem Wasser befindliche Wärme durch Entspannung geeignet zur Rückverstromung nutzen zu können. Gewährleistet die thermische Konditionierung des Wassers mittels des wenigstens einen elektrischen Heizelements nicht eine thermische Aufbereitung auf ein Temperaturniveau, welches über einer Minimaltemperatur zum Betrieb einer Hochdruckturbine liegt, kann so durch Umgehung der Hochdruckturbine dennoch die in dem thermisch konditionierten Wasser befindliche Wärme zur Rückverstromung effizient genutzt werden.

Gemäß einer weiteren ebenfalls bevorzugten Ausführungsform der Erfindung ist vorgesehen, dass der wenigstens eine Wasserspeicher mit einer von dem Kernkraftwerk umfassten Gasturbine fluidtechnisch verschaltet wird. Hierbei ist in dem Wasserspeicher insbesondere radioaktiv nicht-kontaminiertes Wasser gespeichert. Aufgrund der fluidtechnischen Verschaltung wird eine Wasserdampf-Injektion in die Gasturbine möglich, so dass während des Gasturbinenprozesses die sich in dem thermisch konditionierten Wasser befindliche Wärme noch in einem Rückverstromungsprozess genutzt werden kann. Hierbei ist anzuführen, dass zahlreiche Kernkraftwerke Gasturbinen zur notfallmäßigen Eigenstromversorgung bereit halten. Durch einfache bauliche Maßnahmen ist es jedoch möglich, den Gasturbinenprozess auch zur Bereitstellung von elektrischer Energie zur Übertragung an die öffentlichen Stromversorgungsnetzwerke zu nutzen. Durch die aus dem Wasserspeicher gespeiste Wasserdampf-Injektion erlaubt eine höhere Leistungsausbeute bei Betrieb der Gasturbine.

Erfindungsgemäß ist ein nachgerüstetes Kernkraftwerk nach einer der vorab beschriebenen Verfahren erhältlich. Insbesondere weist das nachgerüstete Kernkraftwerk mindestens ein elektrisches Heizelement auf, welches zur Aufnahme von elektrischer Energie aus einem externen Versorgungsnetzwerk geeignet ist, und welches über einen bestehenden Wasserkreislauf des Kernkraftwerks wärmetechnisch in dieses integriert ist. Zur Bereitstellung eines betriebsbereiten Heizelementes ist fernerhin auch die elektrische Verbindung des mindestens einen elektrischen Heizelements mit einem elektrischen externen Versorgungsnetzwerk erforderlich. Hierbei kann die Verbindung direkt oder indirekt ausgebildet sein.

Gemäß einer weiteren Ausführungsform dieses nachgerüsteten Kernkraftwerks ist vorgesehen, dass der Wasserspeicher als Druckwasserspeicher ausgebildet ist. Folglich kann Wasser auch bei einem Temperaturniveau von deutlich über 100 °C zur späteren zeitlichen Nutzung, insbesondere zur Rückverstromung in einem Dampfturbinenprozess, zwischengespeichert werden.

Gemäß einer bevorzugten Ausführungsform des erfindungsgemäßen Verfahrens zum Betrieb eines nachgerüsteten Kernkraftwerks ist vorgesehen, dass weiterhin ein Schritt des Speicherns von erwärmtem Wasser in einem Wasserkreislauf, insbesondere in einem Reaktordruckbehälter und/oder in wenigstens einem Wasserspeicher umfasst ist. Der Wasserspeicher kann als Druckwasserspeicher ausgebildet sein. Allgemein erfolgt die Speicherung des Wassers einen wasserführenden Kraftwerkskreislauf, also einen Wasserkreislauf. Die Speicherung des erwärmten Wassers ermöglicht die zeitlich nachfolgende Nutzung der in dem Wasser gespeicherten thermischen Wärme, insbesondere zur Rückverstromung. Hierbei sei darauf hingewiesen, dass ein Reaktordruckbehälter bzw. ein Wasserspeicher, die mit dem Wasserkreislauf verschaltet sind, erfindungsgemäß ebenfalls als zu dem Wasserkreislauf gehörig betrachtet werden sollen. Entsprechend einer besonders bevorzugten Ausführungsform des Verfahrens zum Betrieb eines Kernkraftwerks ist vorgesehen, dass weiterhin ein Schritt des Entspannens von erwärmtem Wasser in einer Dampfturbine zur elektrischen Stromerzeugung vorgesehen ist. Das erwärmte Wasser kann hierbei dem Reaktordruckbehälter entnommen werden bzw. aus einem Wasserspeicher, welcher auch als Druckwasserspeicher ausgebildet sein kann. Allgemein wird das erwärmte Wasser aus einem Wasser führenden Kraftwerkskreislauf, also einem Wasserkreislauf entnommen. Die Dampfturbine kann ausführungsgemäß als Hochdruck- und/oder Mitteldruck- und/oder Niederdruckdampfturbine ausgebildet sein. Da das erwärmte Wasser durch das mindestens eine Heizelement direkt oder auch indirekt thermisch konditioniert wurde, ermöglicht die Entspannung des so erwärmten Wassers in der Dampfturbine eine besonders einfache und effiziente Form der Rückverstromung. Hierbei kann typischerweise auf die von dem Kernkraftwerk bereits umfasste Infrastruktur, insbesondere den Wasserkreislauf bzw. vorhandene Dampfturbinen, zurückgegriffen werden.

Gemäß einer weiteren besonders bevorzugten Ausführungsform des Verfahrens zum Betrieb eines nachgerüsteten Kernkraftwerks ist vorgesehen, dass während des Betreibens des mindestens einen elektrischen Heizelements ebenfalls eine von dem Kernkraftwerk umfasste Speisewasserpumpe und/oder Kondensatpumpe und/oder Kühlwasserpumpe betrieben wird. Der gleichzeitige Betrieb des wenigstens einen elektrischen Heizelementes zusammen mit den Pumpen erhöht die negative Regelleistung des Kraftwerks. Zusätzlich kann der Reaktordruckbehälter und/oder der Kondensatbehälter des Kernkraftwerks befüllt werden. Durch die Befüllung des Reaktordruckbehälters wird dem Wasserkreislauf des Kernkraftwerks eine größere Menge an Wasser zugeführt, welches thermisch konditioniert und zwischengespeichert werden kann. Die Befüllung des Kondensatbehälters verursacht eine entsprechende Abkühlung des Kondensators, wobei dieser zu einem späteren Zeitpunkt etwa während der Rückverstromung als Kältesenke dienen kann. Ausführungsgemäß wird folglich durch das nachgerüstete Kernkraftwerk vermehrt elektrische Energie aufgenommen, jedoch auch gleichzeitig für einen späteren Verbrauch bereitgehalten bzw. bevorratet.

Entsprechend einer weiteren besonders bevorzugten Ausführungsform des Verfahrens zum Betrieb eines nachgerüsteten Kernkraftwerks ist vorgesehen, dass während des Entspannens von erwärmtem Wasser in einer Dampfturbine zur elektrischen Stromerzeugung eine von dem Kernkraftwerk umfasste Speisewasserpumpe und/oder Kondensatpumpe und/oder Kühlwasserpumpe nicht betrieben wird. Folglich wird der elektrische Energieverbrauch während der Rückverstromungsphase dadurch vermindert, dass die sonst mittels elektrischer Energie betriebenen Pumpen nicht betrieben werden. Damit erhöht sich die bei der Rückverstromung abgegebene elektrische Energiemenge des nachgerüsteten Kernkraftwerks. Gleichzeitig kann es ausreichend sein, den bereits kalten Kondensator über eine gewisse Betriebszeit nicht mit weiterem kalten Kühlwasser zu versorgen, da die Wärmekapazität des in dem Kondensator befindlichen kalten Wassers bereits ausreichend ist, um den Dampf, der aus der Dampfturbine austritt, zu kondensieren. Ausführungsgemäß erlaubt das Verfahren folglich eine Bereitstellung einer relativ erhöhten elektrischen Energiemenge.

Gemäß einer weiteren Ausführungsform der Erfindung ist ebenfalls vorgesehen, dass weiterhin ein Schritt des Eindüsens von erwärmtem Wasser, vor allem Wasserdampf, in eine von dem Kraftwerk umfasste und betriebene Gasturbine beinhaltet ist, wobei das Wasser aus einem Wasserkreislauf bzw. wenigstens einem Wasserspeicher entnommen wird. Wie oben bereits ausgeführt, werden Gasturbinen in einem Kernkraftwerk typischerweise als Back-up-Lösung zur Sicherung der Eigenstromversorgung vorgehalten. Nach entsprechendem Umbau können diese Gasturbinen jedoch auch zur Bereitstellung von elektrischer Leistung an die öffentlichen Stromversorgungsnetzwerke benutzt werden. Das Eindüsen von Wasser führt aufgrund der in dem eingespritzten Dampf befindlichen Energie und der Erhöhung des Massenstroms zu einer Leistungserhöhung bei Betrieb der Gasturbine. Hierbei ist darauf zu achten, dass das eingedüste Wasser nicht aus einem radioaktiv kontaminierten Wasserkreislauf entnommen wird. Ausführungsgemäß kann folglich eine Leistungserhöhung bei Bereitstellung von elektrischer Energie durch die Gasturbine erreicht werden.

Nachfolgend soll die Erfindung anhand einzelner Zeichnungen im Detail näher beschrieben werden. Hierbei sei darauf hingewiesen, dass die Zeichnungen vor allem als schematische Darstellungen zu verstehen sind und keine Einschränkung hinsichtlich einer konkreten Ausführbarkeit darstellen.

Gleichzeitig sei darauf hingewiesen, dass die in den nachfolgenden Figuren gezeigten Ausführungsformen keine Einschränkung des Erfindungsgegenstandes darstellen. Die von den in den Figuren gezeigten Ausführungsformen umfassten Merkmale werden einzeln für sich wie auch in beliebiger Zusammenschau mit anderen Merkmalen beansprucht.

Weiterhin können die in den Figuren mit bestimmten Bezugszeichen versehenen technischen Merkmale unterschiedliche Bezeichnungen aufweisen können, jedoch entsprechen sie sich hinsichtlich ihrer technischen Funktion und Wirkung einander.

Hierbei zeigen:
- Fig. 1: eine erste Ausführungsform der Erfindung in schematischer Schaltansicht;
- Fig. 2: eine andere Ausführungsform der Erfindung in schematischer Schaltansicht;
- Fig. 3: eine Ausführungsform des erfindungsgemäßen Verfahrens zum Nachrüsten eines Kernkraftwerks in flußdiagrammatischer Ansicht;
- Fig. 4: eine Ausführungsform des erfindungsgemäßen Verfahrens zum Betrieb eines nachgerüsteten Kernkraftwerks in flußdiagrammatischer Ansicht;
- Fig. 5: eine Ausführungsform des erfindungsgemäßen Verfahrens zum Betrieb eines Kernkraftwerks in flußdiagrammatischer Ansicht;

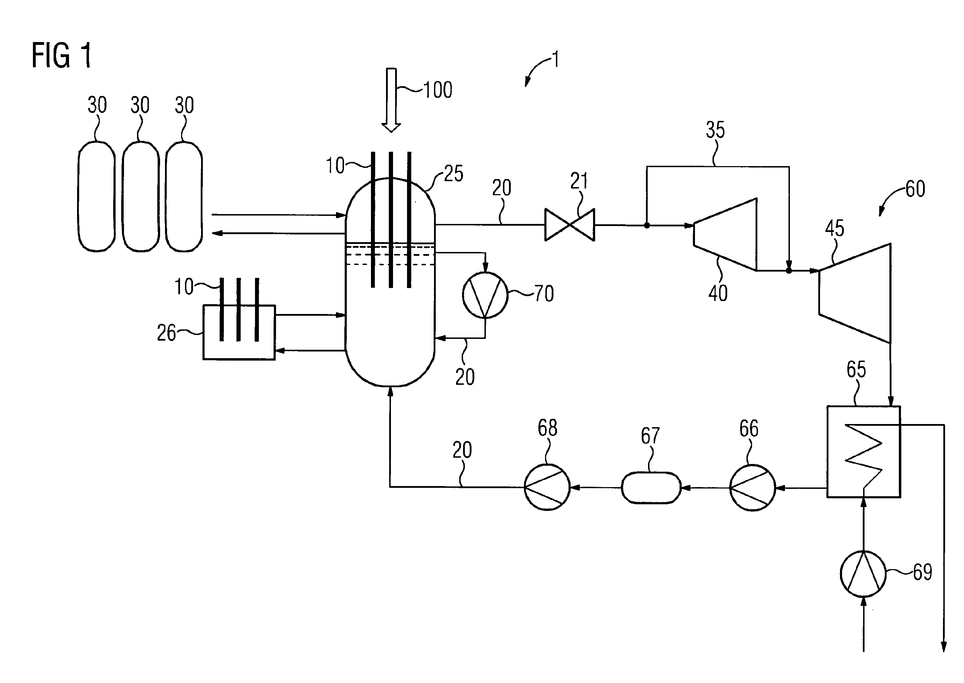

Fig. 1 zeigt eine erste Ausführungsform eines nachgerüsteten Kernkraftwerks 1 in schematischer Schaltansicht. Hierbei umfasst das Kernkraftwerk 1 einen Reaktordruckbehälter 25, in welchem gemäß einer ersten möglichen Ausführungsform mehrere Heizelemente 10 (vorliegend genau drei Heizelemente 10) integriert sind. Die Heizelemente 10 können über ein elektrisches Versorgungsnetzwerk (vorliegend nicht gezeigt) mit elektrischer Energie 100 versorgt werden, so dass bei Betrieb der Heizelemente 10 elektrische Energie in thermische Energie umgesetzt wird. Hierbei wird die thermische Energie an in dem Reaktordruckbehälter 25 befindliches Wasser übertragen.

Das so thermisch konditionierte Wasser kann über einen Wasserkreislauf 20 einer Dampfturbine 60 zur Rückverstromung zugeführt werden. Alternativ ist es auch möglich, das thermisch konditionierte Wasser in einem Wasserspeicher 30 (vorliegend drei Wasserspeicher 30) zu bevorraten. Hierzu wird das in dem Reaktordruckbehälter 25 befindliche Wasser entnommen und dem Wärmespeicher 30 zugeführt.

Alternativ oder auch zusätzlich zu den in dem Reaktordruckbehälter 25 integrierten Heizelementen 10 kann auch eine externe Heizeinheit 26 vorgesehen sein, in welcher elektrische Heizelemente 10 (vorliegende genau drei Heizelemente 10) integriert sind. Die externe Heizeinheit 26 bzw. die Heizelemente 10 sind hierbei mit dem Reaktordruckbehälter 25 fluidtechnisch verschaltet, so dass das in dem Reaktordruckbehälter 25 befindliche Wasser durch Wärmeübertragung thermisch konditioniert werden kann.

Nach thermischer Konditionierung des sich in dem Reaktordruckbehälter 25 befindlichen Wassers durch die elektrischen Heizelemente 10 steht die in dem Wasser gespeicherte thermische Energie für die Rückverstromung zur Verfügung. Hierbei kann die von dem Kernkraftwerk 1 bereits umfasste Infrastruktur genutzt werden.

Ausführungsgemäß ist das in Fig. 1 gezeigte Kernkraftwerk 1 als Siedewasserreaktor ausgebildet. Folglich kann das aus dem Reaktordruckbehälter 25 über den Wasserkreislauf 20 geführte Wasser direkt mit der Dampfturbine 60 in Kontakt treten, wodurch jedoch eine radioaktive Kontamination erfolgt. Zur Strömungsführung des in dem Wasserkreislauf befindlichen Wassers ist ein Steuerventil 21 vorgesehen, welches in dem Wasserkreislauf 20 verschaltet ist.

Werden die elektrischen Heizelemente 10 nun mit elektrischer Energie versorgt und erwärmen sich, ist das Steuerventil 21 geschlossen, so dass in dem Reaktordruckbehälter 25 die Temperatur und der Druck des darin befindlichen Wassers steigt. Das Speichervolumen des Reaktordruckbehälters 25 ist in erster Linie von dessen Füllvolumen und der Temperaturdifferenz bei thermischer Aufladung abhängig. Von der Anmelderin vorgenommene vereinfachte Abschätzungen haben ergeben, dass ein gewöhnlicher Reaktordruckbehälter 25 zusammen mit dem Wasserkreislauf 20 in etwa 40 MWh an thermischer Energie zwischenspeichern kann. Das Speichervolumen kann zusätzlich noch durch den wenigstens einen Wärmespeicher 30 erhöht werden.

Die Dampfturbine 60 ist vorliegend als eine Hochdruckturbine 40 sowie eine stromabwärts folgende Niederdruckturbine 45 ausgeführt. Zur Überbrückung der Hochdruckturbine 40 ist eine By-Pass-Leitung 35 vorgesehen, die das aus dem Reaktordruckbehälter 25 abgeleitete Wasser unter Umgehung der Hochdruckturbine 40 der Niederdruckturbine 45 direkt zuleitet. Zur Kondensation des in der Niederdruckturbine 45 entspannten Wassers ist ausführungsgemäß ein Kondensator 65 vorgesehen, der über eine Kühlwasserpumpe 69 mit kaltem Wasser und damit mit ausreichend Kälte versorgt wird. Das in Folge des Wärmeübertrags in dem Kondensator 65 auskondensierte Wasser wird anschließend mittels der Kondensatpumpe 66 dem Kondensatbehältnis 67 zugeführt, in welchem das flüssige Wasser bevorratet werden kann. Bei Bedarf kann mittels der Speisewasserpumpe 68 aus dem Kondensatbehältnis 67 erneut flüssiges Wasser entnommen werden, um es dem Reaktordruckbehälter 25 zur thermischen Konditionierung zuzuführen.

Zur weiteren Umwandlung von elektrischer in thermische Energie können auch die mit dem Reaktordruckbehälter 25 zusammen wirkenden Umwälzpumpen 70 eingesetzt werden (vorliegend nur eine Umwälzpumpe 70 gezeigt). Werden die Umwälzpumpen 70 etwa unter hoher Last betrieben, kommt es aufgrund der Reibung im Wasser und der Wärmeentwicklung im Motor der Umwälzpumpen 70 zu einer Wärmeübertragung an das Wasser in dem Wasserkreislauf 20 und damit zu einer Erhitzung des Wassers in dem Reaktordruckbehälter 25. Demgemäß kann auch aus dem Netz aufgenommene elektrische Leistung in thermische Energie zur Erwärmung des Wassers in dem Wasserkreislauf umgesetzt werden. Dies ist eine besonders einfache Möglichkeit, Wasser in dem Wasserkreislauf zu konditionieren. Hierbei kann eine thermische Konditionierung mit und ohne elektrische Heizelemente 10 erfolgen.

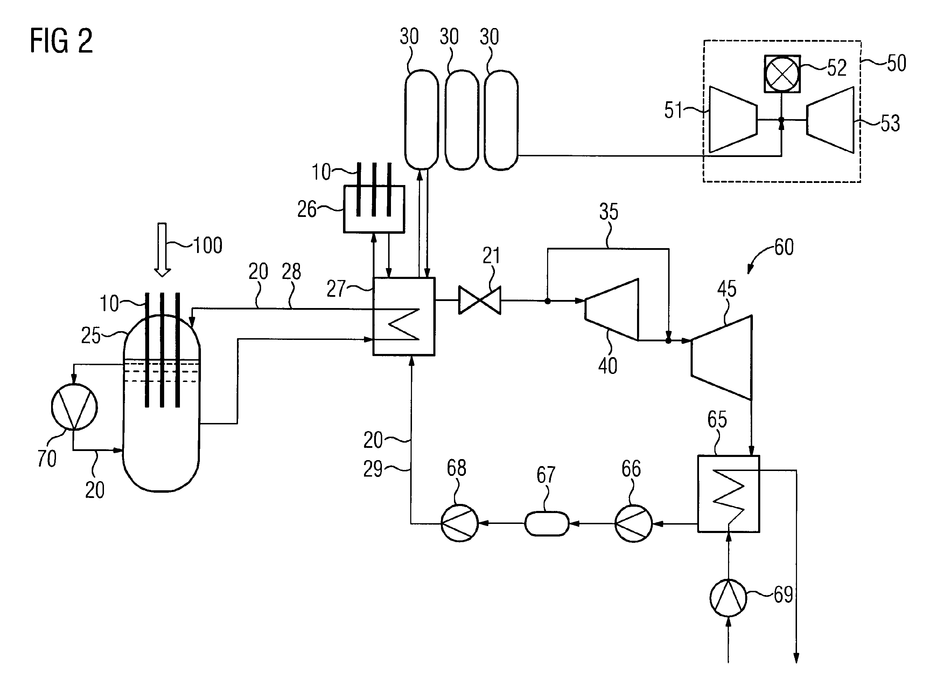

Fig. 2 zeigt eine weitere Ausführungsform der Erfindung in einer schematischen Schaltansicht. Hierbei unterscheidet sich der Aufbau des in Fig. 2 gezeigten nachgerüsteten Kernkraftwerks 1 von dem als Siedereaktor aufgebauten Kernkraftwerk gemäß Fig. 1 dahingehend, dass es als Druckwasserreaktor ausgebildet ist. Demgemäß wird das in dem Reaktordruckbehälter 25 befindliche, thermisch konditionierte Wasser zunächst über einen als Primärkreislauf 28 ausgebildeten Wasserkreislauf 20 entnommen. Die in dem Wasser gespeicherte Wärme wird über den als Dampferzeuger ausgebildeten Wärmetauscher 27 auf Wasser in einem als Sekundärkreislauf 29 ausgebildeten weiteren Wasserkreislauf 20 übertragen.

Ausführungsgemäß ist es möglich, den Reaktordruckbehälter 25 durch Integration einer Mehrzahl an Heizelemente 10 (vorliegend genau drei Heizelemente 10) nachzurüsten. Alternativ oder auch zusätzlich ist es möglich, eine externe Heizeinheit 26 vorzusehen, welche ihrerseits mit einer Mehrzahl an Heizelementen 10 (vorliegend genau drei Heizelemente 10) versehen ist, mit dem Wärmetauscher 27 wärmetechnisch zu koppeln. Das Vorsehen einer externen Heizeinheit 26 hat den Vorteil, dass die Heizelemente 10 nicht mit dem kontaminierten Wasser des Primärkreislaufs 28 in Kontakt gelangen können. Hinsichtlich der Wartung und Instandhaltung der externen Heizeinheit 26 ist dies überaus vorteilhaft.

Gleichzeitig ist es möglich, sich in dem als Sekundärkreislauf 29 ausgebildeten Wasserkreislauf 20 thermisch konditioniertes Wasser in wenigstens einem Wasserspeicher 30 (vorliegend genau drei Wasserspeicher 30) zwischenzuspeichern. Bei zeitlich späterem Bedarf kann Wasser aus diesem Wasserspeicher 30 zur thermischen Konditionierung des sich in dem als Sekundärkreislauf 29 ausgebildeten Wasserkreislauf 20 befindlichen Wassers bereitgestellt werden. Hierzu kann bspw. das in dem Wasserspeicher 30 befindliche Wasser in den Wasserkreislauf 20 eingebracht werden bzw. auch lediglich über den Wärmetauscher 27 zur thermischen Konditionierung bereitstehen.

Alternativ ist es möglich, das in dem Wärmespeicher 30 befindliche Wasser einer von dem Kernkraftwerk 1 vorgehaltenen Gasturbine 50 zuzuführen, um etwa die Leistungsausbeute bei Betrieb der Gasturbine zu erhöhen. Hierbei ist die Gasturbine 50 mit einer Verdichtereinheit 51, einer Brennkammereinheit 52 und einer Entspannungseinheit 53 versehen. Zur Leistungserhöhung wird Wasser in Dampfform dem Abgas der Gasturbine 50 in der Brennkammereinheit 52 zugeführt, oder direkt in die Entspannungseinheit 53 gegeben.

Alle weiteren Abläufe zur Rückverstromung mittels des in Fig. 2 gezeigten Kernkraftwerks 1 sind im Wesentlichen mit denen des in Fig. 1 beschriebenen Kernkraftwerks 1 vergleichbar.

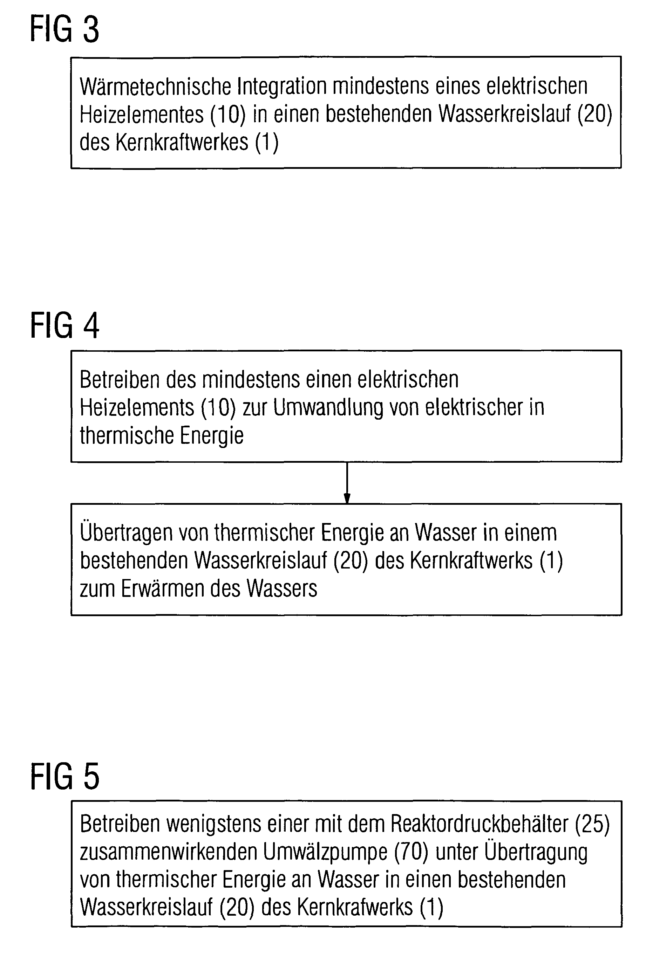

Fig.3 zeigt eine Ausführungsform des erfindungsgemäßen Verfahrens zum Nachrüsten eines Kernkraftwerks in flußdiagrammatischer Ansicht. Hierbei umfasst das Verfahren, wenigstens den folgenden Schritt: Wärmetechnische Integration mindestens eines elektrischen Heizelements (10), welches zur Aufnahme von elektrischer Energie aus einem externen Versorgungsnetzwerk (100) geeignet ist, in einen bestehenden Wasserkreislauf (20) des Kernkraftwerks (1).

Fig. 4 zeigt eine Ausführungsform des erfindungsgemäßen Verfahrens zum Betrieb eines nachgerüsteten Kernkraftwerks in flußdiagrammatischer Ansicht. Hierbei umfasst das Verfahren, wenigstens die folgenden Schritte:
- Betreiben des mindestens einen elektrischen Heizelements (10) zur Umwandlung von elektrischer in thermische Energie;
- Übertragen von thermischer Energie an Wasser in einem bestehenden Wasserkreislauf (20) des Kernkraftwerks (1) zum Erwärmen des Wassers;

Fig.5 zeigt eine Ausführungsform des erfindungsgemäßen Verfahrens zum Betrieb eines Kernkraftwerks (1) in flußdiagrammatischer Ansicht. Hierbei umfasst das Verfahren, wenigstens die folgenden Schritte:
- Betreiben wenigstens einer mit dem Reaktordruckbehälter (25) zusammen wirkenden Umwälzpumpe (70), welche elektrische Energie aus einem externen Versorgungsnetzwerk (100) aufnimmt, unter Übertragen von thermischer Energie an Wasser in einem bestehenden Wasserkreislauf (20) des Kernkraftwerks (1) zum Erwärmen des Wassers.

Weitere Ausführungsformen ergeben sich aus den Unteransprüchen.

## Patentansprüche

1. Verfahren zum Nachrüsten eines Kernkraftwerks (1) umfassend folgenden Schritt:
- Wärmetechnische Integration mindestens eines elektrischen Heizelements (10), welches zur Aufnahme von elektrischer Energie aus einem externen Versorgungsnetzwerk (100) geeignet ist, in einen bestehenden Wasserkreislauf (20) des Kernkraftwerks (1);

2. Verfahren nach Anspruch 1,
**dadurch gekennzeichnet, dass** folgende weiteren Schritte umfasst sind:
- Bereitstellen wenigstens eines Wasserspeichers (30);
- fluidtechnisches Verschalten des wenigstens einen Wasserspeichers (30) mit einem Wasserkreislauf, insbesondere mit einem bereits bestehenden Wasserkreislauf (20) des Kernkraftwerks (1);

3. Verfahren nach einem der vorhergehenden Ansprüche,
**dadurch gekennzeichnet, dass** das elektrische Heizelement (10) in einen Reaktordruckbehälter (25) integriert wird.

4. Verfahren nach einem der vorhergehenden Ansprüche 1 oder 2,
**dadurch gekennzeichnet, dass** das elektrische Heizelement (10) in eine externe Heizeinheit (26) integriert wird, wobei die externe Heizeinheit (26) bzw. das elektrische Heizelement (10) mit dem Reaktordruckbehälter (25) bzw. einem Wasserkreislauf bzw. dem bereits bestehenden Wasserkreislauf (20) fluidtechnisch verschaltet wird.

5. Verfahren nach Anspruch 4,
**dadurch gekennzeichnet, dass** die externe Heizeinheit (26) mit einem Wasserkreislauf bzw. dem bereits bestehenden Wasserkreislauf (20) über einen Wärmetauscher (27) verschaltet wird.

6. Verfahren nach einem der vorhergehenden Ansprüche,
**dadurch gekennzeichnet, dass** eine By-Pass-Leitung (35) vorgesehen wird, die zur fluidtechnischen Umgehung einer Hochdruckturbine (40) des Kernkraftwerks (1) ausgebildet ist.

7. Verfahren nach einem der vorhergehenden Ansprüche 2 bis 6,
**dadurch gekennzeichnet, dass** der wenigstens eine Wasserspeicher (30) mit einer von dem Kernkraftwerk (1) umfassten Gasturbine (50) fluidtechnisch verschaltet wird.

8. Nachgerüstetes Kernkraftwerk (1) erhältlich nach einem der vorhergehenden Ansprüche.

9. Nachgerüstetes Kernkraftwerk nach Anspruch 8,
**dadurch gekennzeichnet, dass** der Wasserspeicher (30) als Druckwasserspeicher ausgebildet ist.

10. Verfahren zum Betrieb eines Kernkraftwerks (1) erhältlich nach einem der vorhergehenden Ansprüche 1 bis 7, welches folgende Schritte aufweist:
- Betreiben des mindestens einen elektrischen Heizelements (10) zur Umwandlung von elektrischer in thermische Energie;
- Übertragen von thermischer Energie an Wasser in einem bestehenden Wasserkreislauf (20) des Kernkraftwerks (1) zum Erwärmen des Wassers;

11. Verfahren zum Betrieb eines Kernkraftwerks nach Anspruch 10,
**dadurch gekennzeichnet, dass** weiterhin ein Schritt des Speicherns von erwärmtem Wasser in einem Wasserkreislauf (20), insbesondere in einem Reaktordruckbehälter (25) und/oder in wenigstens einem Wasserspeicher (30) umfasst ist;

12. Verfahren zum Betrieb eines Kernkraftwerks nach Anspruch 10 oder 11,
**dadurch gekennzeichnet, dass** während des Betreibens des mindestens einen elektrischen Heizelements (10) ebenfalls eine von dem Kernkraftwerk (1) umfasste Speisewasserpumpe (68) und/oder Kondensatpumpe (66) und/oder Kühlwasserpumpe (69) betrieben wird.

13. Verfahren zum Betrieb eines Kernkraftwerks nach Anspruch 10 bis 12,
**dadurch gekennzeichnet, dass** weiterhin ein Schritt des Einspritzens von erwärmtem Wasser in eine von dem Kernkraftwerk (1) umfasste und betriebene Gasturbine (50) beinhaltet ist, wobei das Wasser aus einem Wasserkreislauf (20) bzw. wenigstens einem Wasserspeicher (30) entnommen wird.

14. Verfahren zum Betrieb eines Kernkraftwerks (1), welches folgende Schritte aufweist:- Betreiben wenigstens einer Umwälzpumpe (70), die mit dem Reaktordruckbehälter (25) zusammen wirkt, welche elektrische Energie aus einem externen Versorgungsnetzwerk (100) aufnimmt, unter Übertragen von thermischer Energie an Wasser in einem bestehenden Wasserkreislauf (20) des Kernkraftwerks (1) zum Erwärmen des Wassers.
